# EUROPEAN PATENT APPLICATION

(11) **EP 0 978 422 A2**
(43) Date of publication of application: **09.02.2000**
(21) Application number: 99202531.2
(22) Date of filing: 02.08.1999
(51) Int. Cl.: B60R 21/20

(54) **Airbag arrangement**

(30) Priority: 07.08.1998 US 131255
(71) Applicant: Delphi Technologies, Inc., Troy, MI 48007 (US)
(72) Inventor: Welch, Jeffrey Allen, Washington, Michigan 48094 (US); Ostermann, Folkert J., 84095 Furth (DE)
(74) Representative: Denton, Michael John

(57) **Abstract**

An airbag arrangement (10) comprises a housing with a base element (16) and a cover (18), with an airbag (14) being arranged in the housing. The base element is at least partly provided with a profiling (20) which absorbs energy through deformation and/or breakage in the event of a head impact (I).

## Description

### Technical Field

The present invention relates to an airbag arrangement.

### Background of the Invention

The present invention relates to an airbag arrangement with a housing which has a base element and a cover, with an airbag being arranged in the housing. Arrangements of this kind are known in principle and are for example arranged in steering wheels, but also in the region of the vehicle roof and of the pillars of the vehicle. In the event of an accident, arrangements of this kind contribute to the safety of the vehicle passenger.

The present invention relates to an airbag arrangement which offers both an active and a passive protection for the vehicle passenger. Furthermore, the invention relates to an airbag arrangement in which the mounting and the manipulation is facilitated.

### Summary of the Invention

The present invention relates to an airbag arrangement with a housing which has a base element and an cover, and in which an airbag is arranged, with the base element being at least partly provided with a profiling which absorbs energy through deformation and/or breakage in the event of a head impact. The airbag arrangement in accordance with the invention represents an active safety element in a vehicle through the airbag which is provided therein. At the same time however the airbag arrangement also offers a passive safety protection since the head impact of a vehicle passenger is strongly damped through the profiling which is provided in accordance with the invention in the event that the airbag has not been inflated, for example when the vehicle delay which has arisen lies beneath a certain threshold value. The profiling which is provided at the base element can consist of an elastic material which deforms elastically or plastically in the event of a head impact and thereby absorbs energy. It is also possible to choose the profiling in such a manner that the latter breaks at a predetermined stress in order thereby to absorb energy. Furthermore, the profiling which is provided in accordance with the invention increases the stiffness of the base element, which further facilitates the manipulation in the mounting of the airbag arrangement in the vehicle.

The profiling of the base element is preferably formed by ribs or flanges. The profiling can also have a meander-shaped cross-section. The profiling preferably has pocket-like intermediate spaces in which parts of the airbag are accommodated. Through this the constructional height of the airbag arrangement can be minimised, with the airbag at the same time serving as a further damping element in the event of a head impact. The cover of the housing can be formed in the conventional manner in the form of a plastic cover. It is however also possible to form the cover as a plastic film, which is preferably provided with a desired ripping seam. In this embodiment the airbag itself forms a further cushioning, since the latter is covered over only by a thin plastic film.

An elastic element can be provided at the cover of the housing in the region of a gas generator of the airbag arrangement in order to produce a damping action in the event of a head impact here as well.

A further object of the present invention is a base element for an airbag housing, with the base element being at least partly provided with a profiling which absorbs energy through deformation and/or breakage in the event of a head impact.

### Brief Description of the Drawings

The present invention will now be described, by way of example, with reference to the accompanying drawing, in which:-
Figure 1 is a cross-section through an airbag arrangement in accordance with the present invention which is mounted in the roof region of a vehicle; and
Figure 2 is a central cross-section through the airbag.

### Description of the Preferred Embodiment

The figures show an airbag arrangement 10 in accordance with the invention which is mounted at a roof structure 12 of a vehicle. In this the vehicle structure 12 is composed of the vehicle roof 13 and the roof bar section 15, which are connected to one another in the conventional way. The airbag arrangement 10 has an airbag 14, which is accommodated in the folded together state in a housing which is formed by a base element 16 and a cover 18.

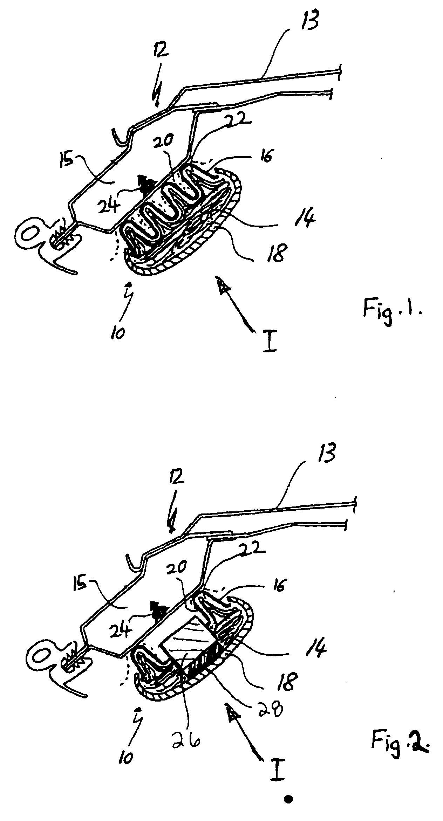

As shown in the figures, the base element 16 is provided with a profiling 20 which is designed to be corrugated or meander-shaped in cross-section, and which serves to absorb energy when the head or another part of the body of a vehicle passenger impacts onto the airbag arrangement. The direction from which a head impact of a vehicle passenger is to be expected is indicated in the figure 1 by the arrow I.

As is further shown in the figures, the folded together airbag 14 is located in the housing of the airbag arrangement 10 and is partly folded into pocket-like intermediate spaces 22 which are formed by the profiling 20. Further parts of the airbag 14 are located between the base element 16 and the cover 18, which is pushed onto the base element 16. For the mounting of the airbag arrangement at the vehicle structure 12, a plurality of spaced snap fasteners 24 are formed at the rear underside of the base element 16. As shown in Figure 2, in the region of a gas generator 26 the base element 16 is designed to be substantially flat, with an elastic element 28 in the form of a pad being provided in the region of this gas generator at the inner side of the cover 18 in order to effect an effective passive impact protection here as well.

In the event of a vehicle delay, in which the head of the vehicle passenger impacts onto the airbag arrangement 10 from the direction I without the airbag 14 being triggered, the head first strikes against the cover 18, through which the arising forces are transferred to the base element 16, the profiling 22 of which first deforms elastically and then plastically, which is indicated by the broken line in the figure. At yet higher forces it can happen that the base element breaks in the region of the profiling 20, with the head of the vehicle passenger being protected both by the cover 18 and by the airbag 14 lying therebetween.

The base element 16 of the airbag arrangement 10 can be manufactured of metal or plastic, with it being possible, through the profiling which is provided and in dependence on the chosen material, for an adaptation to the forces to take place which may arise through the impact of the head of a vehicle passenger.

## Claims

1. Airbag arrangement comprising a housing which has a base element and a cover and in which an airbag is arranged, with the base element being at least partly provided with a profiling which absorbs energy through deformation and/or breakage in the event of a head impact.

2. Airbag arrangement in accordance with claim 1, with the profiling being formed by ribs or flanges.

3. Airbag arrangement in accordance with claim 1, with the profiling having a meander-shaped cross-section.

4. Airbag arrangement in accordance with claim 1, with the profiling forming pocket-like intermediate spaces for the reception of parts of the airbag.

5. Airbag arrangement in accordance with claim 1, with the cover being formed by a plastic film which is provided in particular with a desired ripping seam.

6. Airbag arrangement in accordance with claim 1, with snap fasteners being provided at the base element for a mounting.

7. Airbag arrangement in accordance with claim 1, wherein the arrangement includes a gas generator and wherein an elastic element is provided at the cover in the region of the gas generator.

8. A base element for an airbag housing, the base element at least partly being provided with a profiling which absorbs energy through deformation and/or breakage.

9. Base element in accordance with claim 8, with the profiling being formed by ribs or flanges.

10. Base element in accordance with claim 8, with the profiling having a meander-shaped cross-section.

11. Base element in accordance with claim 8, with the profiling forming pocket-like intermediate spaces for the reception of portions of the airbag.

12. Base element in accordance with claim 1, with snap fasteners being provided for a mounting.
